# FASCICULE DE BREVET EUROPEEN

(11) **EP 0 683 585 B1**
(45) Date de publication et mention de la délivrance du brevet: **28.01.2004**
(21) Numéro de dépôt: 95401129.2
(22) Date de dépôt: 16.05.1995
(51) Int. Cl.: H04L 25/03

(54) **Dispositif de prise de décision par estimation de séquence à maximum de vraisemblance**
Entscheidungsapparat mit Maximalwahrscheinlichkeitsfolgeschätzung
Decision apparatus using MLSE

(30) Priorité: 20.05.1994 FR 9406180
(43) Date de publication de la demande: 22.11.1995
(73) Titulaire: ALCATEL, 75008 Paris (FR)
(72) Inventeur: Mourot, Christophe, F-92600 Asnières (FR); Kumar, Vinod, F-75005 Paris (FR)
(74) Mandataire: El Manouni, Josiane

(56) Documents cités:
- WO-A-94/09582
- SIGNAL PROCESSING. EUROPEAN JOURNAL DEVOTED TO THE METHODS AND APPLICATIONS OF SIGNAL PROCESSING, vol. 25, no. 3, Décembre 1991 AMSTERDAM NL, pages 307-318, MORGÜL ET AL. 'Decision directed channel parameter estimation and tracking using erroneous detectors'
- IEEE JOURNAL ON SELECTED AREAS IN COMMUNICATION, vol. 11, no. 7, Septembre 1993 NEW YORK US, pages 1034-1045, LIU ET AL. 'A soft-output bidirectional decision feedback equalization technique for TEMA cellular radio'

## Description

La présente invention concerne l'estimation de la qualité des transmissions dans un système de radiocommunication, et en particulier un dispositif de prise de décision par estimation de l'algorithme de Viterbi dans un système de radiocommunication.

Dans les systèmes de radiocommunication du type GSM ou DCS, le décodage des informations reçues et/ou l'égalisation font appel aux informations qui précèdent en utilisant un algorithme connu sous le nom d'algorithme de Viterbi. Une description de l'algorithme et du traitement associé se trouve dans l'article "The Viterbi algorithm" paru dans la revue Proceedings of the IEEE, vol 61, n°3, mars 1973, pages 268-278. L'état de la technique comprend également des documents tels que, par exemple, la demande de brevet WO A 94 09582, l'article « décision directed channel parameter estimation and tracking using erroneous detectors » paru dans la revue Signal processing, european journal devoted to the methods and applications of signal processing, vol. 25, n°3, 12/1991, pages 307-318 et l'article « A soft ouput bidirectional decision feedback equalization technique for TEMA cellular radio » paru dans la revue IEEE journal on selected areas in communication, vol. 11, n0 7, 9/1993, pages 1034-1035.

Le problème qui se pose dans l'utilisation de l'algorithme de Viterbi est de pouvoir estimer la qualité du résultat puisque la détermination d'un symbole reçu est basée sur un calcul du meilleur chemin reliant les symboles reçus au cours d'un nombre prédéterminé de temps bauds, les différents chemins possibles étant associés à des grandeurs mathématiques cumulatives appelées métriques. Une estimation de la qualité du résultat obtenu est donc de comparer la métrique totale du meilleur chemin à un seuil prédéterminé. Si la valeur de la métrique est au-dessus du seuil, on estime que la qualité est bonne, et dans le cas contraire que la qualité est mauvaise.

L'estimation de la qualité du résultat de l'algorithme de Viterbi est utile pour pouvoir prendre un certain nombre de décisions, par exemple pour le contrôle de la puissance de transmission ou pour décider de changer de cellule.

Malheureusement, le calcul de la métrique pour le meilleur chemin ne donne pas d'informations sur les différences locales, qui peuvent être importantes, entre le meilleur chemin et les chemins possibles.

C'est pourquoi le but de l'invention est de réaliser un dispositif permettant d'estimer la qualité de l'algorithme de Viterbi utilisé par un terminal d'un réseau de radiocommunication de façon à pouvoir la fournir à un organe de décision du système pour y modifier un ou plusieurs des paramètres de transmission.

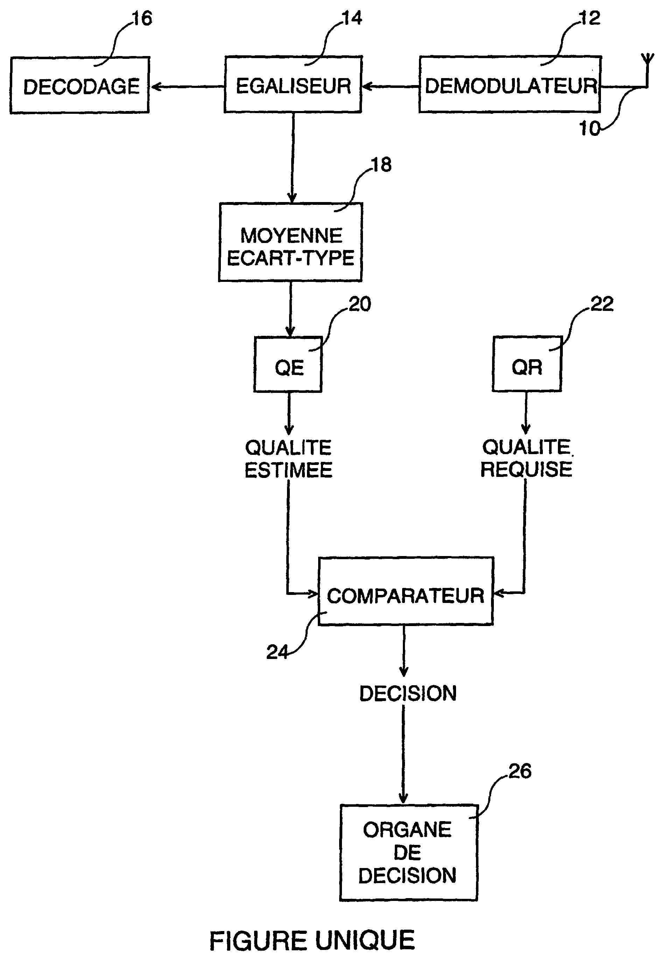

Les buts, objets et caractéristiques de l'invention ressortiront mieux de la description suivante, faite en référence à la figure unique représentant un mode de réalisation du dispositif selon l'invention.

L'objet de l'invention est donc un dispositif de prise de décision dans un système de radiocommunication de type GSM ou DCS comprenant un moyen de calcul de la moyenne et de l'écart-type des métriques de chaque branche de l'algorithme de Viterbi, un moyen de'détermination d'un niveau de qualité d'un paramètre de la transmission correspondant au résultat fourni par le moyen de calcul, et un comparateur pour comparer le niveau de qualité estimée fourni par le moyen de détermination à un niveau requis de qualité du paramètre pour fournir un signal de décision dépendant du résultat de la comparaison à un organe de décision apte à modifier une ou plusieurs des caractéristiques de transmission en réponse au signal de décision.

Comme illustré sur la figure, les signaux d'informations sont reçus dans un terminal mobile d'un réseau de radiocommunication de type GSM au moyen d'une antenne 10. Les signaux sont ensuite démodulés et convertis en numérique dans le démodulateur 12. Puis ils sont égalisés dans un égaliseur 14 qui, pour les besoins de l'invention, est supposé utiliser l'algorithme de Viterbi. Ensuite les signaux égalisés sont traités pour restitution sous leur forme d'origine dans différents modules désignés globalement sur la figuré par une unité de décodage 16.

Conformément à l'objet de l'invention, les résultats obtenus avec l'algorithme de Viterbi utilisé dans l'égaliseur 14 sont traités de la façon suivante, dans une unité de calcul de moyenne et écart-type 18. On considère d'abord le meilleur chemin qui passe par différents états du treillis selon l'algorithme de Viterbi. A chaque état, on calcule une métrique de branche. Au fur et à mesure, les métriques sont stockées en mémoire. Puis on calcule la moyenne des métriques de branches et leur écart-type.

La moyenne de branches et l'écart-type sont ensuite fournis à une table de vérité 20 où une correspondance est établie entre les entrées formées des moyennes des métriques et des écarts-types et une qualité recherchée pour un bloc d'informations ou pour plusieurs blocs d'informations suivant la fenêtre de mesure considérée.

La qualité recherchée peut être un taux d'erreurs binaires, une qualité de pondération des décisions, une information relative au rapport signal/bruit. Son contenu exact dépend en fait de la décision à prendre.

La table de vérité 20 (QR) fournit donc un niveau de qualité estimé en fonction de la qualité de l'algorithme de Viterbi. Ce niveau de qualité est alors comparé à un niveau requis de ladite qualité fournie par une autre table 22 dans un comparateur 24. La sortie du comparateur est un signal de décision d'une valeur binaire qui est transmis à un organe de décision 26.

Les différentes unités composant le dispositif de l'invention sont incorporées dans le terminal mobile, excepté l'organe de décision 26, qui peut se trouver soit dans le terminal mobile, soit dans le réseau, par exemple à la station de base (BTS). En effet, dans le cas d'un réseau de type GSM ou DCS, les décisions concernant la transmission, à savoir le réglage de la puissance ou le changement de cellule, sont prises à partir du réseau. Par contre, dans un réseau de type DECT, l'organe de décision apte à prendre de telles décisions se trouve situé dans le terminal lui-même. Bien entendu, dans le cas d'un réseau GSM, le signal de décision est transmis au moyen d'un canal de transmission vers la station de contrôle.

On doit noter que la table de vérité 20 est construite préalablement par des mesures sur le terrain et par des simulations. Bien entendu, cette table de vérité pourrait être remplacée par un dispositif de traitement des données calculant à chaque fois la qualité estimée en fonction des paramètres d'entrée que sont la moyenne des métriques de branches et l'écart-type.

L'intérêt de l'invention est d'affiner et d'améliorer le processus de décision grâce à une corrélation plus fine entre l'ensemble des couples moyenne et écart-type et celui des qualités estimées. En effet, la métrique de branche est donnée par la distance euclidienne entre la branche possible et la branche reçue. Plus la moyenne est proche de zéro plus la qualité est bonne. Cela est d'autant plus vrai que l'écart-type est plus petit, c'est à dire que le métrique de branche reste proche de zéro le long du chemin complet. Par conséquent, un bloc d'informations reçu présentant de telles caractéristiques pourra être considéré comme entièrement fiable et inversement. De manière générale, tout bloc d'informations ayant un écart-type élevé devrait être considéré comme erroné.

Bien que dans le mode de réalisation décrit ci-dessus, on se sert des résultats fournis par l'algorithme de Viterbi utilisé dans l'égaliseur, il va de soi qu'on pourrait se servir également, de la même façon que précédemment, des résultats fournis par l'algorithme de Viterbi utilisé pour le décodage des données.

## Revendications

1. Dispositif de prise de décision dans un système de radiocommunication du type comportant des terminaux mobiles dont chaque terminal comprend, pour la réception des signaux d'informations, une unité (14) utilisant l'algorithme de Viterbi pour l'égalisation ou pour le décodage des signaux reçus après démodulation,
ledit dispositif étant **caractérisé en ce qu'**il comprend :
un moyen (18) de calcul de la moyenne et de l'écart-type des métriques de chaque branche dudit algorithme de Viterbi,
un moyen (20) de détermination d'un niveau de qualité d'un paramètre de la transmission correspondant au résultat fourni par ledit moyen de calcul, et
un comparateur (24) pour comparer le niveau de qualité estimée fourni par ledit moyen de détermination à un niveau requis de qualité dudit paramètre pour fournir un signal de décision selon le résultat de la comparaison,
ledit signal de décision étant fourni à un organe de décision (26) apte à modifier une ou plusieurs des caractéristiques de transmission en réponse audit signal de décision.

2. Dispositif selon la revendication 1, dans lequel ledit organe de décision (26) est dans le réseau.

3. Dispositif selon la revendication 1, dans lequel ledit organe de décision (26) est dans ledit terminal.

4. Dispositif selon l'une des revendications 1, 2 ou 3, dans lequel ladite unité (14) utilisant l'algorithme de Viterbi est l'égaliseur dudit terminal.

5. Dispositif selon l'une des revendications 1, 2 ou 3, dans lequel ladite unité (14) utilisant l'algorithme de Viterbi est une unité de décodage dudit terminal.

6. Dispositif selon l'une des revendications précédentes, dans lequel ledit moyen (20) de détermination d'un niveau de qualité d'un paramètre de transmission, est une table de vérité.

7. Procédé de prise de décision dans un système de radiocommunication du type comportant des terminaux mobiles dont chaque terminal utilise pour la réception des signaux d'informations l'algorithme de Viterbi pour l'égalisation ou pour le décodage des signaux reçus après démodulation, comprenant les étapes suivantes :
calcul de la moyenne et de l'écart-type des métriques de chaque branche de l'algorithme de Viterbi,
détermination d'un niveau de qualité d'un paramètre de transmission correspondant au résultat fourni à l'étape de calcul,
comparaison dùdit niveau de qualité d'un paramètre de transmission avec un niveau requis de qualité dudit paramètre et fourniture d'un signal de décision selon le résultat de la comparaison, et
envoi dudit signal de décision à un organe de décision apte à modifier une ou plusieurs des caractéristiques de la transmission.

8. Procédé selon la revendication 7, dans lequel ledit signal de décision est utilisé pour commander un changement de cellule.

## Claims

1. A device for making decisions in a mobile radio system of the type including mobile terminals each of which comprises, for receiving information signals, a unit (14) using the Viterbi algorithm for equalization or for decoding the received signals after demodulation, said device being **characterized in that** it comprises:
means (18) for calculating the mean and the standard deviation of the metrics of each branch of said Viterbi algorithm,
means (20) for determining a quality level of a transmission parameter corresponding to the result supplied by said calculation means, and
a comparator (24) for comparing the estimated quality level supplied by said determination means and a required quality level of said parameter in order to produce a decision signal according to the result of the comparison,
said decision signal being supplied to a decision unit (26) adapted to modify one or more transmission characteristics in response to said decision signal.

2. A device according to claim 1 wherein said decision unit (26) is in the network.

3. A device according to claim 1 wherein said decision unit (26) is in said terminal.

4. A device according to claim 1, claim 2 or claim 3 wherein said unit (14) using the Viterbi algorithm is the equalizer of said terminal.

5. A device according to claim 1, claim 2 or claim 3 wherein said unit (14) using the Viterbi algorithm is a decoder of said terminal.

6. A device according to any of the above claims wherein said means (20) for determining a quality level of a transmission parameter comprise a truth table.

7. A method of making decisions in a mobile radio system of the type including mobile terminals each of which, for receiving information signals, uses the Viterbi algorithm for equalization or for decoding the received signals after demodulation, the method comprising the following steps:
calculating the mean and the standard deviation of the metrics of each branch of the Viterbi algorithm,
determining a quality level of a transmission parameter corresponding to the result supplied in the calculation step,
comparing said quality level of a transmission parameter with a required quality level of said parameter and supplying a decision signal according to the result of the comparison, and
sending said decision signal to a decision unit adapted to modify one or more transmission characteristics.

8. A method according to claim 7 wherein said decision signal is used to command a change of cell.

## Patentansprüche

1. Entscheidungsapparat in einem Radiokommunikationssystem mit mobilen Endgeräten, von denen jedes für den Empfang von Informationssignalen eine Einheit (14) beinhaltet, in welcher der Viterbi-Algorithmus zur Entzerrung oder Dekodierung von Signalen nach der Demodulation angewandt wird,
wobei besagter Apparat **dadurch gekennzeichnet ist, daß** er folgendes beinhaltet:
Eine Vorrichtung (18) zur Berechnung des Mittelwertes und der Abweichungsart der Metriken der einzelnen Zweige des besagten Viterbi-Algorithmus',
eine Vorrichtung (20) zur Ermittlung eines Qualitätsniveaus eines Übertragungsparameters entsprechend dem von der Berechnungsvorrichtung gelieferten Ergebnis und
einen Komparator (24) zum Vergleichen des von der Ermittlungsvorrichtung gelieferten geschätzten Qualitätsniveaus mit einem Qualitätsniveau des besagten Parameters, das für die Lieferung eines Entscheidungssignals entsprechend dem Vergleichsergebnis gefordert ist,
wobei das besagte Entscheidungssignal einem Entscheidungselement (26) zugeführt wird, das geeignet ist, eine oder mehrere Übertragungseigenschaften in Abhängigkeit vom besagten Entscheidungssignal zu verändern.

2. Vorrichtung gemäß Anspruch 1, in welcher sich das besagte Entscheidungselement (26) im Netz befindet.

3. Vorrichtung gemäß Anspruch 1, in welcher sich das besagte Entscheidungselement (26) im besagten Endgerät befindet.

4. Vorrichtung gemäß einem oder mehreren der Ansprüche 1, 2 oder 3, in welcher die besagte Einheit (14), in welcher der Viterbi-Algorithmus angewandt wird, der Entzerrer des besagten Endgerätes ist.

5. Vorrichtung gemäß einem oder mehreren der Ansprüche 1, 2 oder 3, in welcher die besagte Einheit (14), in welcher der Viterbi-Algorithmus angewandt wird, eine Dekodiereinheit des besagten Endgerätes ist.

6. Vorrichtung gemäß einem oder mehreren der vorgenannten Ansprüche, in welcher die besagte Vorrichtung (20) zur Bestimmung eines Qualitätsniveaus eines Übertragungsparameters eine Wahrheitstabelle ist.

7. Verfahren zur Entscheidungsfindung in einem Radiokommunikationssystem mit mobilen Endgeräten, von denen jedes für den Empfang von Informationssignalen den Viterbi-Algorithmus zur Entzerrung oder Dekodierung von Signalen nach der Demodulation anwendet, bestehend aus folgenden Schritten:
Berechnung des Mittelwertes und der Abweichungsart der Metriken der einzelnen Zweige des besagten Viterbi-Algorithmus',
Ermittlung eines Qualitätsniveaus eines Übertragungsparameters entsprechend dem vom Berechnungsschritt gelieferten Ergebnis,
Vergleich des besagten Qualitätsniveaus eines Übertragungsparameters mit einem geforderten Qualitätsniveau des besagten Parameters und Lieferung eines Entscheidungssignals entsprechend dem Vergleichsergebnis und
Übergabe des besagten Entscheidungssignals an ein Entscheidungselement, das geeignet ist, eine oder mehrere Übertragungseigenschaften in Abhängigkeit vom besagten Entscheidungssignal zu verändern.

8. Verfahren gemäß Anspruch 7, in welchem besagtes Entscheidungssignal dazu verwendet wird, eine Zellenumschaltung auszulösen.
